# EUROPEAN PATENT SPECIFICATION

(11) **EP 1 026 099 B1**
(45) Date of publication and mention of the grant of the patent: **20.10.2004**
(21) Application number: 00101808.4
(22) Date of filing: 28.01.2000
(51) Int. Cl.: B65D 39/16, B23P 19/04, B27J 5/00

(54) **Assembly machine for mushroom-shaped stoppers for bottles**
Montagemaschine für pilzförmige Flaschenstopfen
Machine d'assemblage pour des bouchons en forme de champignon pour les bouteilles

(30) Priority: 02.02.1999 IT TO990068
(43) Date of publication of application: 09.08.2000
(73) Proprietor: Italco S.r.l., 14100 Asti (IT)
(72) Inventor: Coppo, Vincenzo, 15034 Cellamonte (Alessandria) (IT); Occelli, Romano, 14100 Asti (IT); Serra, Giancarlo, 14053 Canelli (Asti) (IT)
(74) Representative: Cian, Paolo

(56) References cited:
- FR-A- 1 030 684
- FR-A- 1 332 654
- US-A- 5 161 302

## Description

The present invention relates to an assembly machine for mushroom-shaped stoppers for bottles, which stoppers comprise a shank of cork and a head of plastics, wood or equivalent material, wherein the head has a central seat into which an end portion of the shank is inserted with the interposition of an adhesive.

Assembly machines according to the preamble of claim 1 are already known in which the transporting means are constituted by an intermittently rotating carousel. A peripheral region of the carousel comprises a succession of equidistant seats which receive the heads of the stoppers from a feeder.

Along the path of the seats are a station which comprises an adhesive-dispenser and a subsequent station which comprises a pushing device which inserts each shank, coming from a shank-feeder, under pressure into the seat of the associated head with the interposition of the adhesive.

The intermittent rotational movement of the carousel is dictated by the fact that the heads have to stop first in the station for the application of the adhesive and then in the station for the insertion of the shanks.

Owing to those characteristics, the known machine is relatively slow and does not lend itself to the high-speed assembly of stoppers.

The main object of the present invention is to provide an assembly machine of the type in question which, owing to its continuous operation, lends itself to the automatic assembly of mushroom-shaped stoppers with high production rates.

According to the invention, that object is achieved by means of an assembly machine as claimed.

In a machine according to the invention, the high production rates are obtained owing to the fact that the means for transporting the heads comprise a continuously movable endless conveyor, and also the shanks are transported by a second endless conveyor movable continuously in synchronism with the first conveyor.

As will be better understood from the description referring to the drawings, the insertion means also carry out their work continuously.

The invention will become clearer on reading the following detailed description of one of its preferred embodiments which is given by way of non-limiting example.

In this description, other advantageous characteristics of the assembly machine will be emphasised.

The description will be given with reference to the appended drawings, in which:
Figure 1 is a perspective view of a mushroom-shaped stopper of the type which can be assembled in the machine according to the invention,
Figure 2 is a perspective view of the two members of the stopper, the head and the shank, in the separated state before their assembly,
Figure 3 is a schematic representation of the successive stages of the assembly operation carried out by the machine,
Figure 4 is a partly sectioned side view of the entire assembly machine,
Figure 5 is a cross-section made substantially in the plane indicated V-V in Figure 4,
Figure 6 is a top view of the machine, with some parts removed,
Figure 7 is a horizontal section made substantially in the plane indicated VII-VII in Figure 4, in which some parts have been represented in the form of broken lines to improve the clarity of the drawing,
Figure 8 is a cross-section made substantially in the plane indicated VIII-VIII in Figure 4,
Figure 9 is a partial cross-section made on an enlarged scale in the plane indicated IX-IX in Figure 4,
Figure 10 is an enlarged partial side view of the region indicated X in Figure 4,
Figure 11 is a partial top view of the region indicated XI in Figure 10,
Figure 12 is a schematic top view on an enlarged scale of the region indicated XII in Figure 7,
Figure 13 is a cross-section made on an enlarged scale in the plane indicated XIII-XIII in Figure 12, and
Figure 14 is a side view according to the arrow XIV in Figure 9.

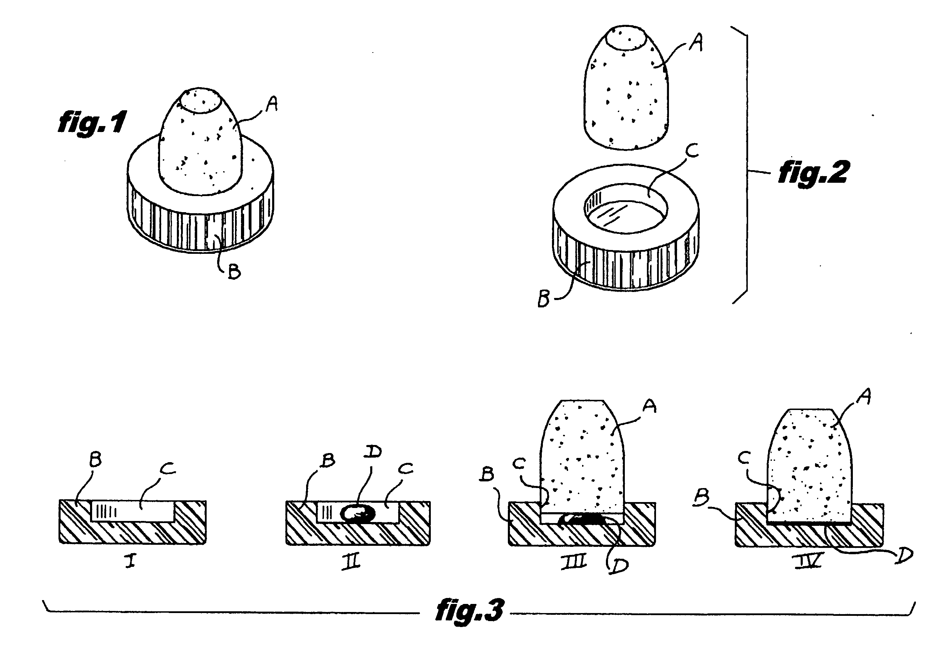

Referring to Figures 1 and 2, a mushroom-shaped stopper for bottles, of a well-known type, comprises a shank A of cork and a head B of plastics, wood or equivalent material.

The head B has a blind central cylindrical seat C for receiving a corresponding end portion of the shank A.

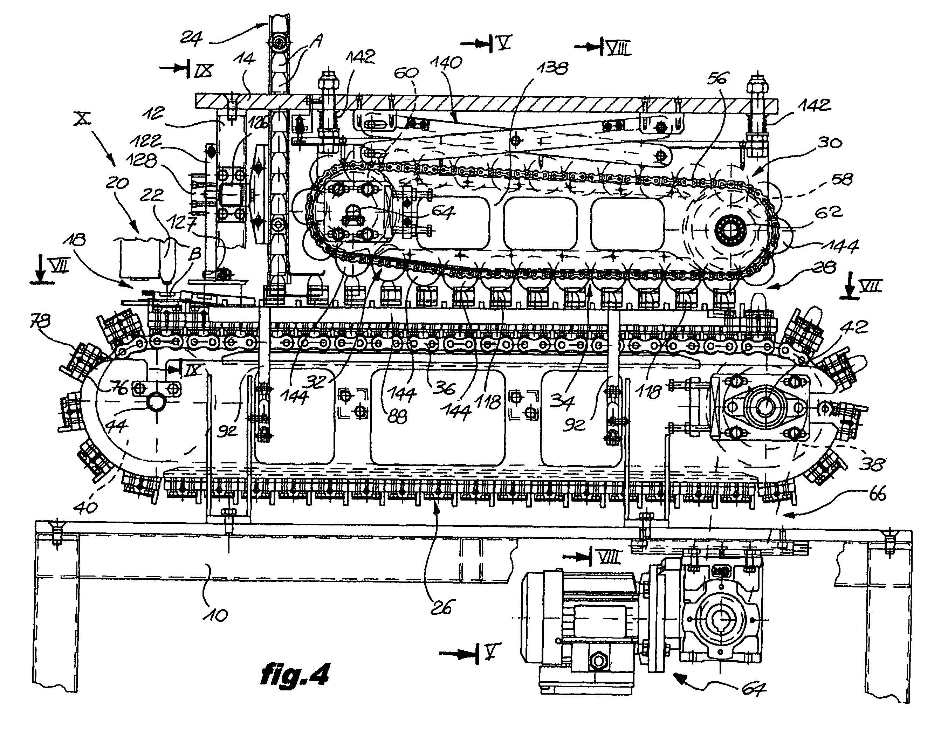

The assembly machine which will be described in detail with reference to Figures 4 to 14 is suitable for the continuous assembly of successive stoppers in the sequence indicated in Figure 3.

In Figure 3, a head B with its seat C open towards the top is represented at I.

At II, a drop or measure of adhesive D has been deposited from above in the seat C of the head B.

In a subsequent stage, illustrated at III, a cork shank A is engaged in the seat C with the interposition of the adhesive D. In a final stage, illustrated at IV, the shank A has been inserted fully into the seat C of the head B, and the adhesive, which, owing to the pressure of the shank A, has been distributed in a thin layer, also indicated D, gradually sets until it is completely hard.

The stopper having the structure illustrated at IV, after the adhesive D has set, is discharged from the assembly machine.

Reference will now be made to Figure 4 in order to outline the principal components of the assembly machine, occasionally referring to other Figures in order to clarify the details of those components.

The machine comprises a bench 10 which carries a frame having lateral uprights 12 which in their turn carry an upper plate 14 (Figures 4, 5, 6, 8, 9 and 14).

A substantially horizontal assembly path which starts on the left and finishes on the right in Figure 4 is defined inside the machine frame. At the start of the path is a feeder for the heads B of Figures 1 to 3 which is generally indicated 18.

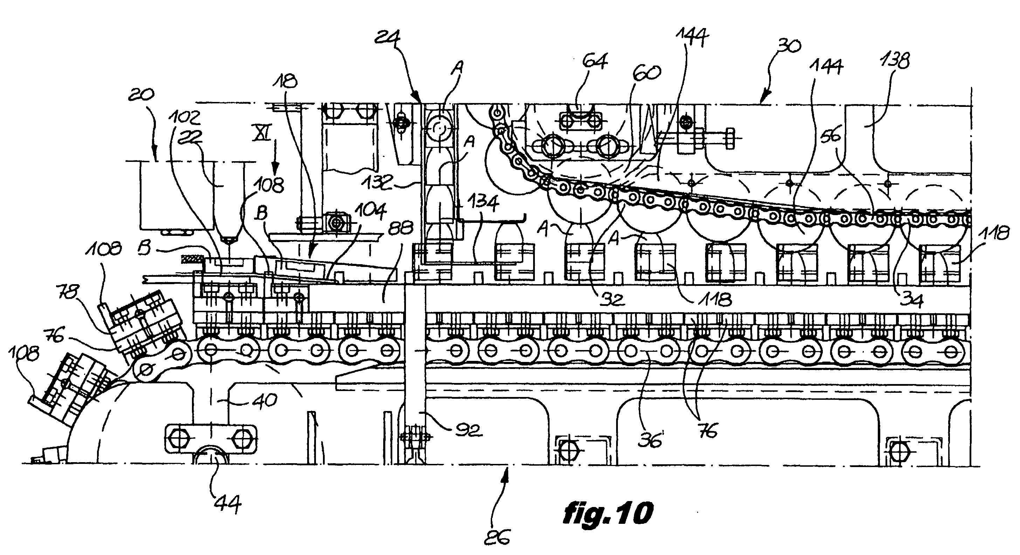

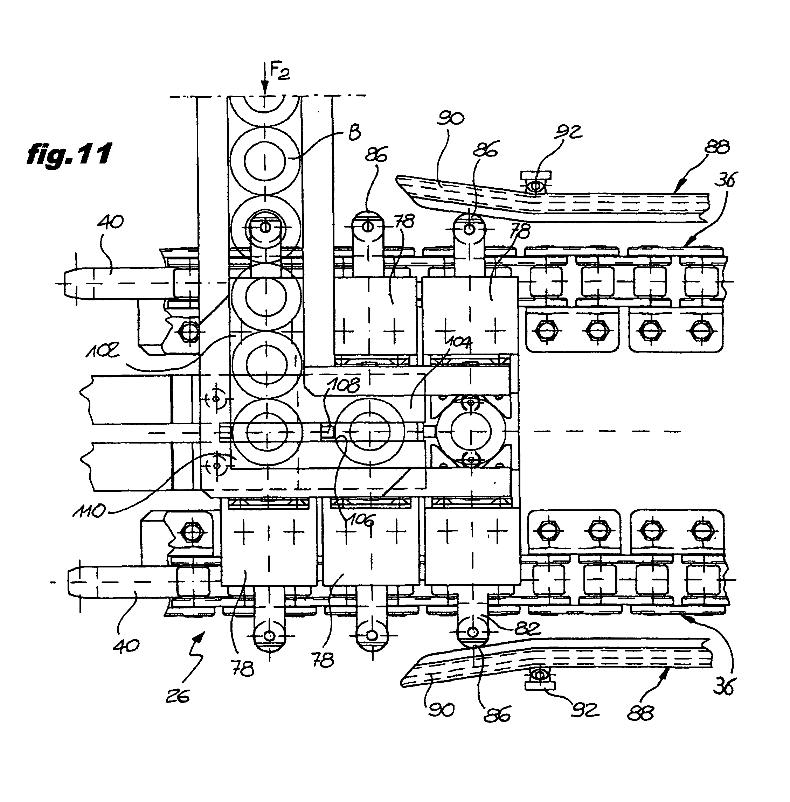

The feeder 18 will be described in detail hereinafter with reference to Figures 10 and 11.

An adhesive-dispenser of known type, which is generally indicated 20 and is shown in Figure 10, as well as in Figure 4, is arranged at the location of the head-feeder 18.

The adhesive-feeder 20 comprises a nozzle 22 and is controlled in such a manner that the nozzle 22 lets fall a drop or measure of adhesive D, as in Figure 3, II, each time a head B stops beneath said nozzle.

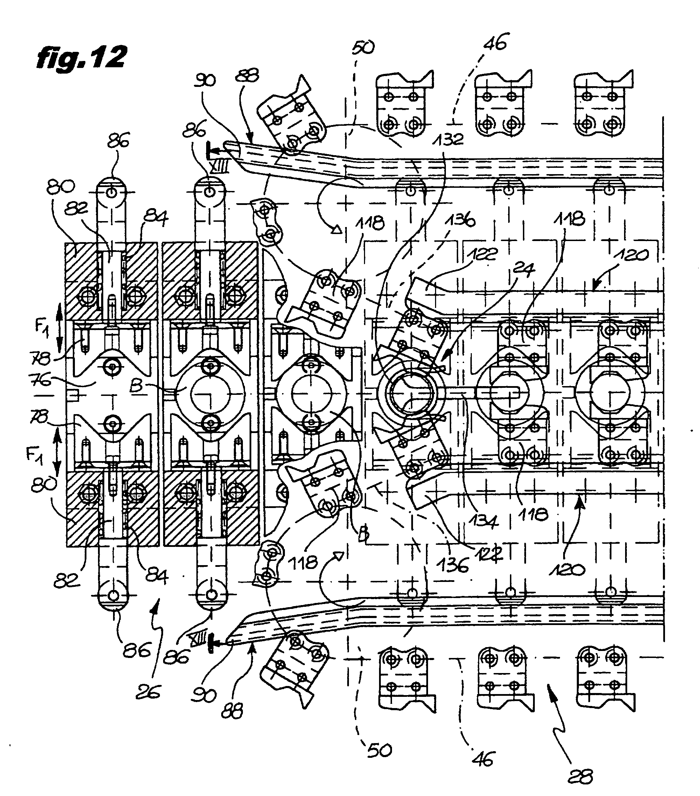

At one point on the path, situated downstream of the adhesive-dispenser 20, the machine comprises a feeder for shanks A, which is generally indicated 24 and which is shown more clearly in Figures 10 and 12, with reference to which it will be described in detail.

A first continuously movable endless conveyor, which is used to transport the successive heads B from the beginning to the end of the path, is generally indicated 26 in Figure 4. The details of the first conveyor 26 will be described hereinafter with particular reference to Figures 4, 5, 8, 10, 11, 12 and 13.

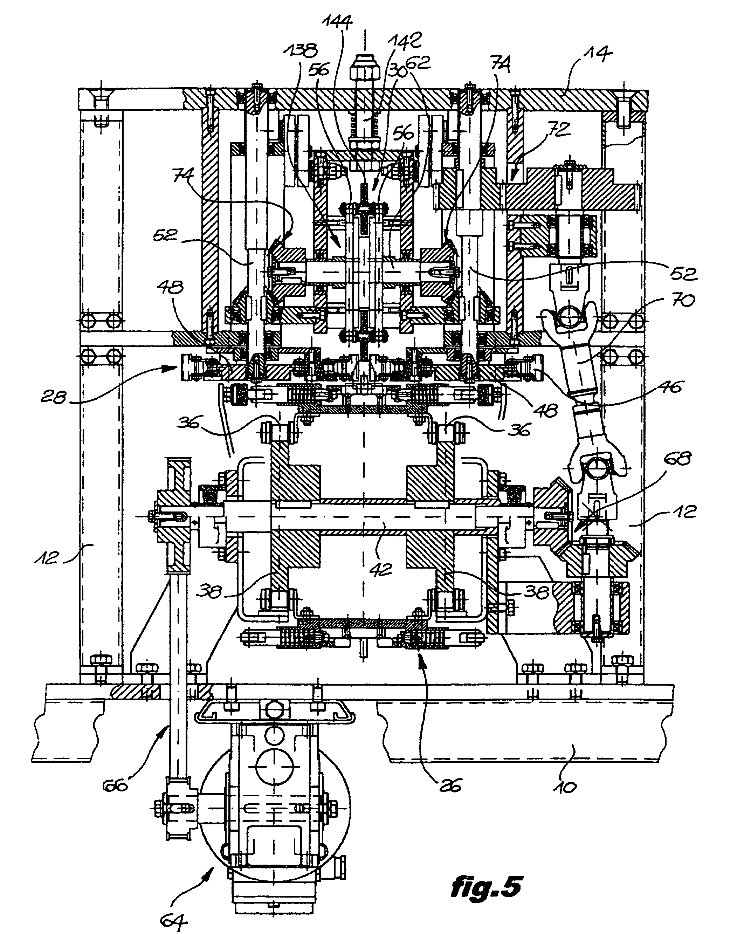

Associated with the shank-feeder 24 is a second endless conveyor generally indicated 28. This second conveyor 28 is movable continuously in synchronism with the first conveyor 26 and is capable of taking successive shanks A from their feeder 24 and transporting each of them to a position aligned above the seat C of a corresponding head B. The details of the second conveyor 28 will be described hereinafter with special reference to Figures 5, 6, 7, 9, 12 and 14.

The assembly machine also comprises insertion means for carrying out stages III and IV of Figure 3. The insertion means comprise a pressure device which is generally indicated 30. The pressure device 30 extends above the portion of the path in which the shanks A are transported by the second conveyor 28 and has a first portion 32 which is arranged and inclined in such a manner as to engage the shanks A and insert them gradually into the seats C of the heads B, and a second portion 34 which is arranged in such a manner as to keep the shanks A in a state in which they are pressed into the seats C, as in Figure 3, IV, until, along the path, the layer of adhesive D has set.

The details of the pressure device 30 will be described hereinafter with special reference to Figures 4, 5, 8 and 10.

Preferably, the first conveyor 26 comprises a pair of endless chains 36 (Figures 4, 5, 8, 10, 11 and 13) which are arranged side by side and which have driving sprockets 38 (Figures 4 and 5) and driven sprockets 40 (Figures 4, 6, 10 and 11).

The driving sprockets 38 and the driven sprockets 40 are splined onto respective common transverse driving 42 (Figures 4 and 5) and driven 44 (Figures 4 and 10) shafts.

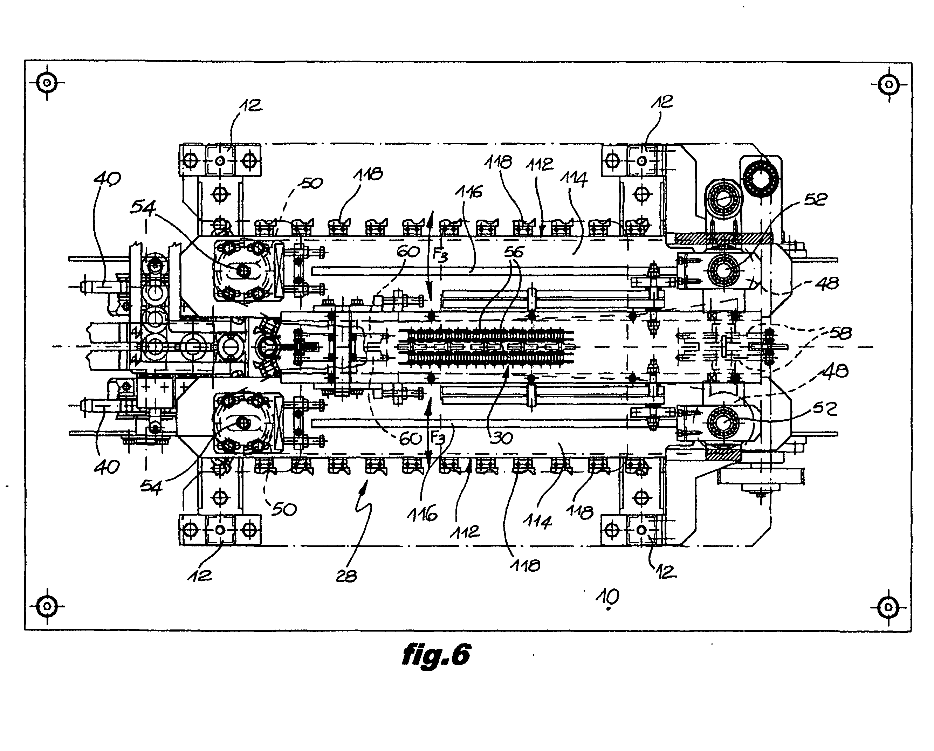

Also preferably, the second conveyor 28 comprises a pair of endless chains 46 circulating in unison and guided by respective counter-rotating driving sprockets 48 (Figures 5, 6, 7 and 14) and driven sprockets 50 (Figures 6, 7, 8, 9 and 14) having upright axes.

52 indicates the driving shafts of the chains 46, and 54 indicates their driven wheels or rollers.

Other details of the second conveyor 28 will be described hereinafter with particular reference to Figures 6, 7, 9, 12 and 14.

Referring to Figures 4, 5, 8 and 10, the pressure device 30 preferably comprises a third endless conveyor which is movable continuously in synchronism with the first and second conveyors 26, 28.

The third conveyor 30 comprises a pair of chains 56 (also shown partially in Figure 6) which are arranged side by side and which circulate in synchronism around driving sprockets 58 and driven sprockets 60 having horizontal transverse axes.

The two driving sprockets 58 are connected to one another by a driving shaft 62 and the two driven sprockets 60 are connected to one another by a driven shaft 64.

The three conveyors 26, 28 and 30 are controlled in unison by an electrical gear-motor carried by the table 10 and shown in Figures 4 and 5 where it is marked 64.

As can be seen in Figure 5, the driving sprockets 38 of the first conveyor 26, 48 of the second conveyor and 58 of the third conveyor are arranged downstream of the path (on the right in Figure 4) and are connected in common to the gear-motor 64 by means of a train of gears.

In particular, the output shaft of the gear-motor 64 is connected by a toothed belt drive 66 to the driving shaft 42 of the first conveyor 26.

The motion is then transmitted from the driving shaft 42 to one of the driving shafts 52, the one on the right in Figure 5, of the second conveyor 28 by means of a bevel gear pair 68, a cardan shaft 70 and a pair of spur gears 72.

The same motion, in the opposite direction, is transmitted to the other driving shaft 52 of the second conveyor 28 by means of the driving shaft 62 of the third conveyor 30, to which the driving shafts 52 of the second conveyor 28 are connected by respective bevel gear pairs 74.

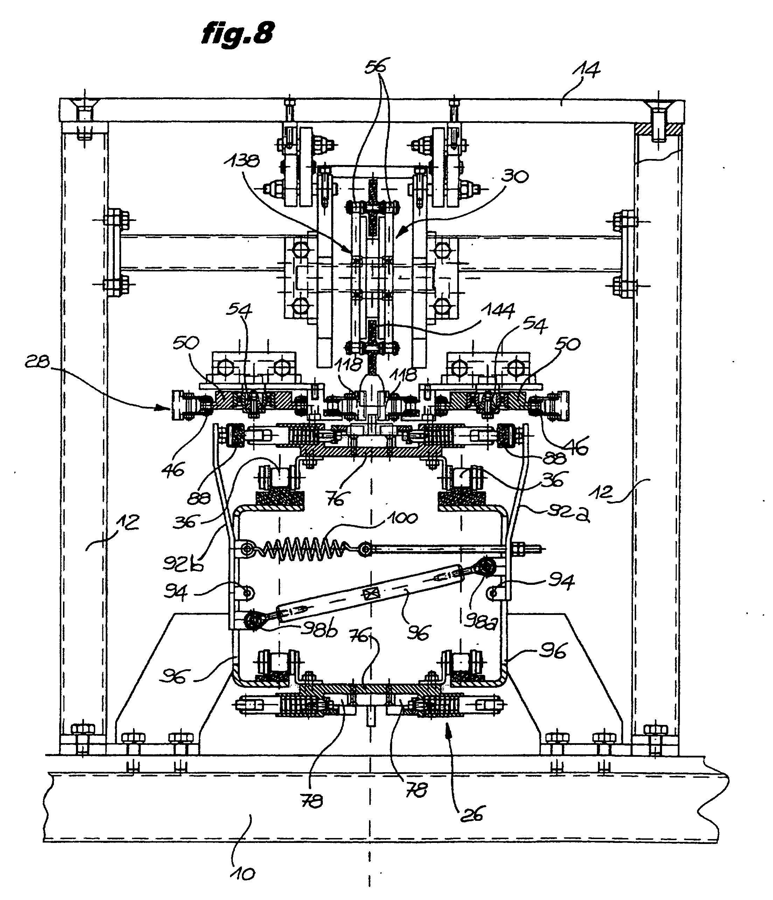

The principal details of the first conveyor 26 will now be described with particular reference to Figures 8 to 13.

The two chains 36 of the first conveyor 26, arranged side by side, are connected to one another by a succession of slide supports in the form of cross-members 76 which connect the two chains 36 to one another in the manner of bridges.

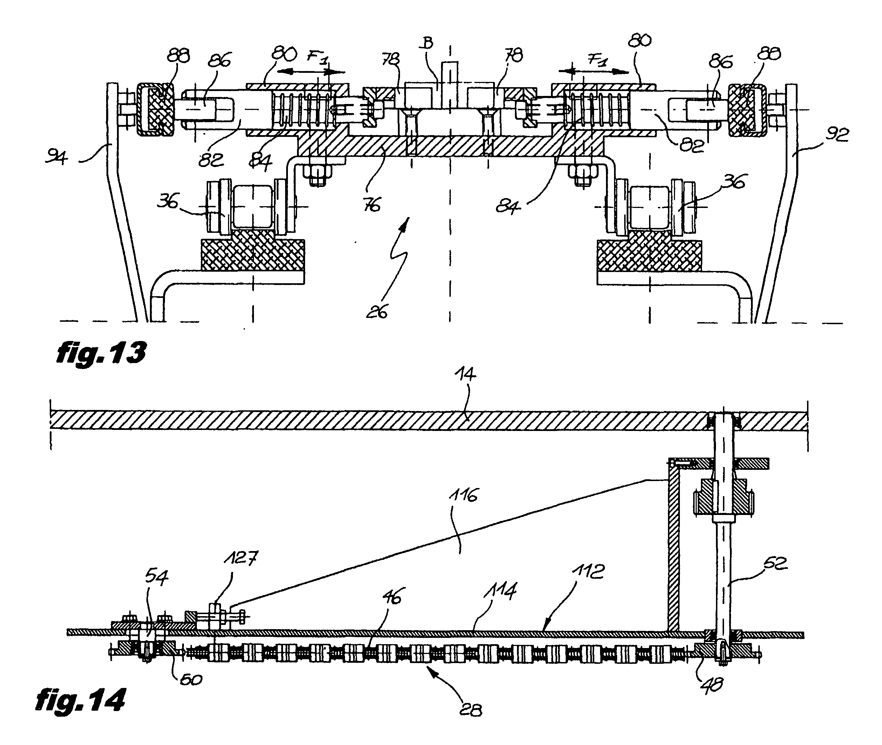

Each slide support or bridge 76 carries a pair of first jaws 78. The jaws 78 are in the form of slides which are transversely slidable on the respective support 76 towards one another and in the opposite direction, in accordance with the double arrows F1 (Figures 12 and 13).

As can be seen especially in Figure 12, the first jaws 78 are recessed substantially in a V shape in order to surround respective heads B.

Advantageously, the pairs of first jaws 78 can be opened out and moved towards one another in accordance with the double arrows F1 in a yielding manner in order to adapt to heads B having different diameters.

As is known, the heads of the mushroom-shaped stoppers of the type in question have a diameter of the order of 30 mm, but this diameter can vary by a few millimetres more or less depending on the manufacturers and depending on the preferences of the bottlers.

The fact that the first jaws 78 can adapt to heads of different diameters makes the assembly machine illustrated and described here suitable for the assembly of stoppers having heads of different diameters without having to carry out adjustment work or setting-up work on the machine in the transition from one assembly campaign to another.

The yielding mounting of the jaws 78 is illustrated in detail with reference to Figures 12 and 13.

Each slide support or cross-member 76 comprises a pair of opposing tubular components 80 in each of which is slidably mounted a push rod 82 which is movable in accordance with the double arrows F1. Each rod 82 is fast with a respective jaw 78.

Each rod 82 is urged by a respective helical spring 84 in the opening direction of the jaws 78.

Each push rod 82 carries, at its outer end, that is to say, remote from the jaw 78 carried by the other rod 82, a follower member 86 in the form of a roller.

Referring to Figures 4, 5 and 7 to 13, the first conveyor 26 is flanked by a pair of opposing rails 88 of wear-resistant material which extend along the path and which act as linear cams engageable by the follower members or rollers 86.

The two rails 88 have initial converging portions 90 in order, at the start of the path, to move the two jaws 78 of each pair towards one another against the force of their springs 84 in order to lock a head B between the jaws and keep it locked until the end of the path is reached.

Advantageously, each rail 88 is supported by an oscillating member constituted by a pair of arms 92 (92a, 92b) arranged near the beginning and near the end of the path, as shown in particular in Figure 4.

Referring to Figure 8, the arms 92a, 92b of each pair are pivoted by means of respective pins 94 to fixed framework members 96.

In each pair, the two arms 92a, 92b are connected to one another by a connecting rod 96 whose length can be adjusted because it is constructed in the form of a turnbuckle.

The connecting rod 96 is connected to the arm 92a on the right (in Figure 8) by means of an articulation 98a arranged above the associated pivot 94 and is connected to the arm 92b on the left (in Figure 8) by means of an articulation 98b arranged below the associated pivot 94.

The two arms 92a, 92b are biased towards one another by a transverse spring tie rod 100, the function of which is to absorb the differences in diameter of the various types of head B.

Owing to the interconnection described and illustrated in Figure 8, by means of the connecting rods 96, it is ensured that the two rails 88 approach one another and move away from one another symmetrically relative to the path of the heads B in order to ensure that the heads are clamped in a centred manner when they are gripped by the first jaws 78.

Furthermore, the ability to adjust the length of the connecting rods 96 enables the distance between the rails 88 and the path of the heads B to be adjusted symmetrically once and for all.

Reference will now be made to Figures 10 to 13 to describe the feeder 18 of the heads B and the means enabling the first conveyor 26 to take those heads in succession from the feeder.

The feeder 18 comprises an arrival chute 102 along which the heads B slide in alignment in accordance with the arrow F2 in Figure 11. The arrival chute 102 opens out laterally into the path of the first jaws 78 in a position that is raised relative to those jaws.

The feeder 18 also comprises a leaving chute 104. The latter extends with a downward slope in the downstream direction along an initial portion of the path of the heads B and has a median longitudinal slit 106.

Each slide support or cross-member 76 has an entraining tooth 108. The entraining tooth 108 is capable of projecting upwards through the slit 106 in order to push a head B coming from the arrival chute 102 and deposit it between the first jaws 78 at the end of the leaving chute 104.

The heads B which travel according to the arrow F2 (Figure 11) along the arrival chute 102 stop briefly in a region, indicated 110 in Figure 11, which connects the arrival chute 102 and the leaving chute 104.

The nozzle 22 of the adhesive-dispenser 20 is located just above the connecting region 110 and is thus arranged or programmed to deposit, each time, a drop or measure of adhesive, such as that indicated D in Figure 3, II, in the seat C of a head B which has temporarily stopped in the connecting region 110, and immediately before the entraining tooth 108 starts to entrain that head B.

Reference will now be made especially to Figures 6, 7, 9, 10, 12 and 14 to describe the preferred details of the second conveyor 28.

The chains 46 of the second conveyor 28 are carried by respective cantilevered support arms 112 constituted by a strong horizontal plate 114 and by an upright rib or gusset plate 116, shown more clearly in Figure 14.

The plate 114 of each cantilevered arm 112 is rotatably mounted in the manner of a flag about the respective driving shaft 52 which is arranged towards the downstream end of the path.

The transmission shaft or pin 54 of the driven sprocket 50 of each chain 46 of the second conveyor 28 is supported by the free end of the arm 112, which end is remote from the driving shaft 52.

Each of the chains 46 of the second conveyor 28 is provided with second equidistant jaws 118 which form respective pairs of opposing jaws. Those pairs of second jaws 118 are recessed substantially in a V-shape in order to be able to grip the successive shanks A laterally, taking them from the feeder 24, at a point on the path located downstream of the adhesive-dispenser 20.

Along their active paths, in which the second jaws 118 grip the shanks A, the two chains 46 of the second conveyor 28 are flanked by a pair of rails 120 carried by the plates 114 of the respective cantilevered arms 112.
The rails 120 act as linear cams and are engaged by the pins of the chains 46 in order to keep the second jaws 118 in a position clamped around the shanks until, as will be seen hereinafter, the shanks A have been engaged in the seats C of the heads B.

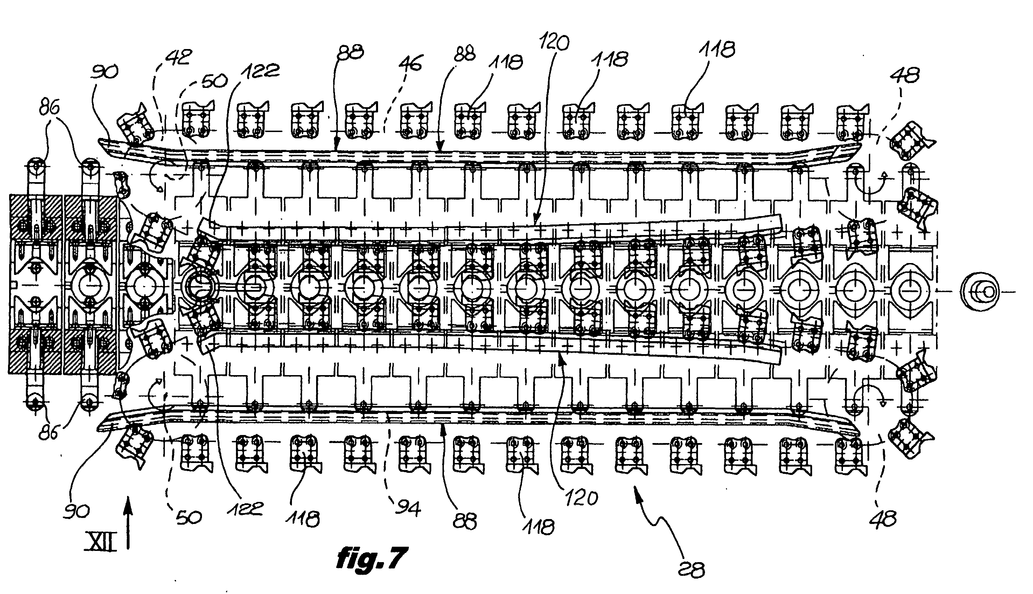

As is shown in particular in Figures 7 and 12, the rails 120 have converging lead-in portions 121 which promote a progressive approach of the second jaws 118 when the latter start to grip a shank A.

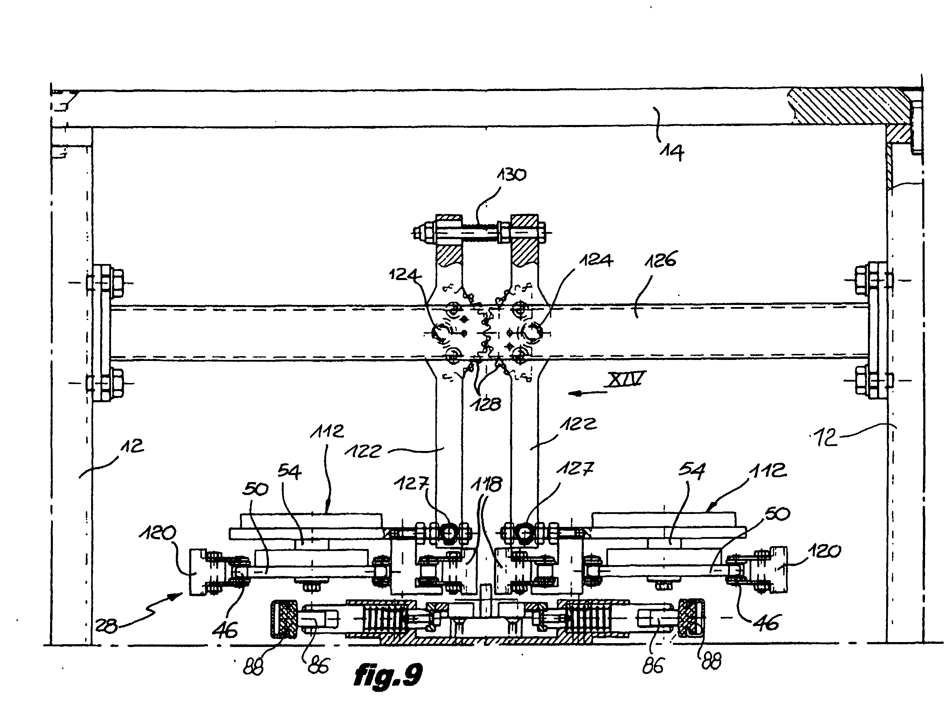

At their free ends, the two arms 112 of the second conveyor 28, which are rotatable in the manner of a flag, are connected to one another (Figure 9) by a pair of levers 122 pivoted at 124 on a cross-member 126 which extends between two uprights 12.

The two levers 122 are connected to the respective cantilevered arms 112 by means of adjustable articulations 127 (see also Figures 4 and 14).

At the pivots 124, the two levers 122 have toothed sectors 128 which are meshed with one another in order to ensure that the second jaws 118 are symmetrical relative to a median line of translation of the shanks A.

At their upper ends, above the pivots 124, the two levers 122 are stressed by resilient means in the form of a helical spring 130 (Figure 9).

The spring 130 is used for the resilient biasing towards one another of the cantilevered arms 112 in order to exert the above clamping force on the shanks A.

Particular reference will now be made to Figures 10 and 12 to describe the characteristics of the shank-feeder 24.

The feeder 24 comprises an upright tubular arrival duct 132 in which the shanks A descend in a stack.

At the end of the duct 132 is a longitudinal bearing ledge 134 for each successive lowermost shank A of the stack.

The second jaws 118 are arranged in such a manner as to grip the lowermost shank, causing it to slide forwards on the ledge 134.

The active paths of the two chains 46 comprise converging initial portions 136 (Figure 12), in part defined by the converging initial portions 122 of the rails 120. The converging portions 136 are disposed at the location of the ledge 134 in order to grip each shank A with a progressive clamping force.

The intensity of this clamping force will be referred to again hereinafter in the course of the description of the pressure device or third conveyor 30.

The third conveyor 30 will now be described with special reference to Figures 4, 5, 8 and 10.

The driving shaft 62 and the driven shaft 64 of the third conveyor 30 are carried by a movable member in the form of a frame 138. The frame 138 is suspended from the upper plate 14 (Figure 4) of the machine housing by a pantographic linkage 140 which ensures the substantially vertical lifting and lowering of the movable member or frame 138, keeping it parallel with itself.

The frame 138 is urged resiliently downwards by resilient means in the form of helical springs 142.

The two chains 56 of the third conveyor 30, which are arranged side by side, carry a series of equidistant idle wheels or rollers 144 having horizontal transverse axes.

As can be seen more clearly in Figure 10, the arrangement is such that each of the wheels 144 accompanies a shank A transported by the second jaws 118 and engages it, pressing it downwards along the first descending inclined portion 32 of the chains 56.

As they pass along this first portion 32, the wheels 144 press on the shanks A, inserting them gradually into the seats C of the heads B.

This insertion is possible because the clamping force exerted on the shanks A by the second jaws 118, owing to the spring 130 in Figure 9, is so weak as to permit the descent of the shanks A into the seats C under the thrust of the wheels 144.

Along the second portion 34 of the active pass of the conveyor 30, the wheels 144 hold the shanks A in a position pressed into the seats C, until the adhesive has set.

A pressure device 30 which comprises, as pressure or thrust members, idle wheels or rollers 144, is advantageous because those members, being freely rotatable, do not exert on the shanks A oblique thrusts which could bring them out of alignment with the seats C of the heads B.

In the assembly machine described and illustrated, the second conveyor 28 and the third conveyor 30 are arranged in such a manner that they can adapt to shanks A having different diameters and different lengths or heights, without it being necessary to modify the adjustments or setup of the machine when there is a changeover to the assembly of stoppers having shanks with different dimensions from those of a previous assembly campaign.

As is known, cork shanks have diameters of the order of 20 mm, but those diameters can vary by approximately 2 millimetres more or less.

The flag-like oscillation ability of the cantilevered arms 112 of the second conveyor 28, in conjunction with the spring 130 of Figure 9, enables the second jaws 118 to adapt to all those different diameters.

As is also known, cork shanks may have lengths or heights which are variable, for example, from 20 to 30 mm.

In this case too, the third conveyor 30 adapts automatically to shanks A of different lengths owing to the vertical oscillation ability of the movable member 138 of the third conveyor 30, in conjunction with the yielding thrust of its springs 142.

## Claims

1. An assembly machine for mushroom-shaped stoppers for bottles, which stoppers comprise a shank (A) of cork and a head (B) of plastics, wood or equivalent material, wherein the head has a central seat (C) into which an end portion of the shank is inserted with the interposition of an adhesive (D) and wherein this machine comprises:
- a head-feeder (18),
- transport means (26) which define a path and which, at the beginning of the path, receive the heads (B) one by one from their feeder (18), and, at the end of the path, release the assembled stoppers,
- a shank-feeder (24) capable of presenting a shank (A) in a position aligned with the seat (C) of each successive transported head (B),
- an adhesive-dispenser (20) arranged along the path and capable of interposing a measure (D) of fluid adhesive between each successive transported head (B) and the associated shank (A), and
- insertion means (30) capable of inserting each shank (A) under pressure into the seat (C) of the associated head (B) with the interposition of the adhesive (D),
**characterized in that**
- the head-feeder (18) is capable of feeding the heads (B) with their seats (C) open towards the top,
- the transport means comprise a first continuously movable endless conveyor (26) provided with equidistant pairs of first opposing jaws (78) capable of gripping the successive heads (B) laterally at the beginning of the path and of releasing them at the end of the path,
- the adhesive-dispenser (20) is arranged in such a manner as to deposit, from above, a measure of adhesive (D) on the bottom of each seat (C),
- associated with the shank-feeder (24) is a second endless conveyor (28) which is movable continuously in synchronism with the first conveyor (26) and which is provided with equidistant pairs of second opposing jaws (118) capable of gripping the successive shanks (A) laterally, taking them from the feeder (24), at a point on the path situated downstream of the adhesive-dispenser (20), and of transporting each of them, over a successive portion of the path, into the position aligned above the seat (C) of a corresponding head (B), and
- the insertion means comprise a pressure device (30) which extends above the above-mentioned successive portion of the path and which has a first portion (32) which is arranged and inclined in such a manner as to engage the shanks (A) and insert them gradually into the seats (C) of the heads (B) and a second portion (34) which is arranged in such a manner as to keep the shanks (A) in a state in which they are pressed into the seats (C) until, along the path, the measure of adhesive (D) has set.

2. An assembly machine according to claim 1, **characterized in that** the pairs of first jaws (78) can be moved apart and towards one another in a yielding manner in order to adapt to heads (B) having different diameters.

3. An assembly machine according to claim 1 or 2, **characterized in that** the first conveyor (26) comprises a succession of slide supports (76), each of which carries a pair of first jaws (78), **in that** the first jaws (78) of each pair are in the form of slides slidable transversely on the respective support (76), towards one another and in the opposite direction, and are urged by springs (84) in the direction in which they move away from one another, **in that** each first jaw (78) is provided, on a side remote from the other jaw of the pair, with a follower member (86), and **in that** the first conveyor (26) is flanked by a pair of opposing rails (88) extending along the path, acting as linear cams engageable by the follower members (86) and having converging initial portions (90) for moving the first two jaws (78) of the pair towards one another in such a manner as to grip a head (B) and keep it gripped up to the end of the path.

4. An assembly machine according to claim 3, **characterized in that** each rail (88) is supported by an oscillating member (92) in such a manner that it can move towards the first conveyor (26) and in the opposite direction, and **in that** the two oscillating members (92) are connected to one another by at least one connecting rod (96) which is articulated to the oscillating members in such a manner that the rails (88) move towards one another and away from one another symmetrically relative to the path in order to ensure that the heads (B) gripped by the first jaws (78) are clamped in a centred manner.

5. An assembly machine according to claim 4, **characterized in that** the connecting rod or each connecting rod (96) has an adjustable length so that the distance between the rails (88) and the path can be adjusted symmetrically.

6. An assembly machine according to any one of claims 3 to 5, **characterized in that** the first conveyor comprises a pair of endless chains (36) which are arranged side by side and which have driving sprockets (38) and driven sprockets (40) splined onto respective common transverse shafts (42, 44), and **in that** the slide supports of the pairs of jaws are constituted by cross-members (76) which connect the two chains (36) to one another in the manner of bridges.

7. An assembly machine according to any one of claims 3 to 6, **characterized in that** the head-feeder (18) comprises an arrival chute (102) along which the heads (B) slide in an aligned manner and which opens out laterally into the path of the first jaws (78) in a position which is raised relative to those jaws, and a leaving chute (104) which extends with a downward slope in the downstream direction along an initial portion of the path and which has a median longitudinal slit (106), and **in that** each slide support (76) of the first jaws (78) has an entraining tooth (108) which is capable of projecting upwards through the slit (106) in order to push a head (B) coming from the arrival chute (102) and to deposit it between the first jaws (78) at the end of the leaving chute (104).

8. An assembly machine according to claim 7, **characterized in that** the adhesive-dispenser (20) comprises a nozzle (22) located above a connecting region (110) between the arrival chute (102) and the leaving chute (104) and is arranged in such a manner as to deposit, each time, a drop of adhesive (D) in the seat (C) of a head (B) which has stopped in the connecting region (110) immediately before the entraining tooth (108) starts to entrain that head (B).

9. An assembly machine according to any one of the preceding claims, **characterized in that** the second conveyor (28) comprises a pair of endless chains (46) which circulate in unison and which are guided by respective driving sprockets (48) and driven sprockets (50) having upright axes, the sprockets of one chain rotating in the opposite direction to those of the other chain, and each of which chains carries the second homologous jaws (118) of the pairs, **in that** the chains (46) have substantially parallel active paths which are arranged side by side and along which the second jaws (118) grip the shanks (A) of the stoppers, taking them one by one from their feeder (24), and transport them along the path into respective positions aligned with the seats (C) of the heads (B) transported by the first jaws (78), the second jaws (118) exerting on the shanks (A) a clamping force which is so weak as to permit the descent of the shanks into the seats (C) by means of the pressure device (30).

10. An assembly machine according to claim 9, **characterized in that** the shank-feeder (24) comprises an upright tubular arrival duct (132) in which the shanks (A) descend in a stack and at the end of which is a longitudinal bearing ledge (134) for each successive lowermost shank (A) of the stack, **in that** the second jaws (118) are arranged in such a manner as to grip that lowermost shank, causing it to slide forwards on the ledge (134), and **in that** the active paths of the chains (46) of the second conveyor (28) comprise converging initial portions (136), arranged at the location of the ledge (134), for gripping each shank (A) with progressive clamping.

11. An assembly machine according to claim 9 or 10, **characterized in that** the active paths of the chains (46) of the second conveyor (28) are flanked by a pair of opposing rails (120) acting as linear cams engaged by the chains in order to keep the second jaws (118) in a position clamped around the shanks (A) until the shanks have been engaged in the seats (C) of the heads (B).

12. An assembly machine according to claim 10, **characterized in that** the chains (46) of the second conveyor (28) are carried by cantilevered support arms (112), each of which is rotatable in the manner of a flag about the upright axis of the respective driving sprocket (48), and **in that** those supports (112) are urged towards one another by resilient means (130) in order to exert the above-mentioned clamping force on the shanks (A).

13. An assembly machine according to claim 12, **characterized in that** the two arms (112) of the second conveyor (28), which are rotatable in the manner of a flag, are connected to one another by a pair of levers (122) which have toothed sectors (128) meshed with one another and which are arranged in such a manner as to ensure that the second jaws (118) are symmetrical relative to a median line of translation of the shanks (A), and **in that** the above-mentioned resilient means comprise a spring (130) interposed between the levers (122).

14. An assembly machine according to any one of the preceding claims, **characterized in that** the pressure device comprises a third endless conveyor (30) which is movable continuously in synchronism with the first and the second conveyor (26, 28), having a pair of chains (56) which are arranged side by side and which circulate in synchronism around driving sprockets (58) and driven sprockets (60) having horizontal transverse axes, and which carry a series of equidistant idle wheels or rollers (144) having horizontal transverse axes, each capable of accompanying a shank (A) transported by the second jaws (118) and of engaging it, pressing it downwards, and **in that** the path of the two chains (56) comprises an active lower path having a first portion (32) which descends in the downstream direction and which is arranged and inclined in such a manner that the wheels or rollers (144) engage the shanks (A) and press on them, inserting them gradually into the seats (C) of the heads (B), and a successive, substantially horizontal, portion (34) which is arranged in such a manner as to keep the shanks (A) in a state pressed into the seats (C) until the adhesive (D) has set.

15. An assembly machine according to claim 14, **characterized in that** the third conveyor (30) is carried by a substantially vertically movable member (138) which is urged downwards by resilient means (142).

16. An assembly machine according to claim 15, **characterized in that** the movable member (138) is suspended from a pantographic linkage (140) which ensures that it is lifted and lowered, keeping it parallel with itself.

17. An assembly machine according to claim 1, **characterized in that** the first conveyor (26) comprises at least one endless chain (36) guided by a driving sprocket (38) and by a driven sprocket (40) and the second conveyor (28) comprises at least one endless chain (46) guided by a driving sprocket (48) and by a driven sprocket (50), **in that** the pressure device comprises a third endless conveyor (30) having at least one endless chain (56) which is guided by a driving sprocket (58) and by a driven sprocket (60) and which carries a series of wheels or rollers (144) for pressing on the shanks, and **in that** the driving sprockets (38, 48, 58) of the three conveyors (26, 28, 30) are arranged downstream of the path and are connected to a common motor (64) by means of a train of gears (68, 72, 74) in such a manner that the three conveyors circulate in synchronism.

## Patentansprüche

1. Montagemaschine für pilzförmige Flaschenstopfen, die aus einem Fuß (A) aus Kork und einem Kopf (B) aus Kunststoff, Holz oder dergleichen bestehen, wobei der Kopf einen mittigen Sitz (C) hat, in den ein Ende des Fußes unter Zwischenschaltung einer Klebstoffschicht (D) eingesetzt wird, wobei die Maschine umfaßt:
- eine Zuführeinrichtung (18) für die Köpfe,
- Transportmittel (26), die eine Bahn definieren und die am Beginn der Bahn die Köpfe (B) einzeln nacheinander von ihrer Zuführeinrichtung (18) empfangen und am Ende der Bahn die zusammengefügten Stopfen abgeben,
- eine Zuführeinrichtung (24) für die Füße, die so ausgebildet ist, daß sie jeweils einen Fuß (A) in einer zu dem Sitz (C) jedes der nacheinander transportierten Köpfe (B) ausgerichteten Stellung vorlegt,
- ein Klebstoff-Abgabeorgan (20), das entlang der Bahn angeordnet und so ausgebildet ist, daß es eine Dosis (D) flüssigen Klebstoffs zwischen jeden der nacheinander transportierten Köpfe (B) und den zugehörigen Fuß (A) eingibt,
- Einführmittel (30), die so ausgebildet sind, daß sie jeden Fuß (A) in den Sitz (C) des zugehörigen Kopfes (B) unter Zwischenschaltung des Klebstoffs (D) unter Druck einfügen,
**dadurch gekennzeichnet, daß**
- die Zuführeinrichtung (18) für die Köpfe (B) so ausgebildet ist, daß sie diese mit ihren nach oben offenen Sitzen (C) zuführen,
- die Transportmittel einen ersten kontinuierlich umlaufenden Endlosförderer (26) aufweisen, der mit gleichmäßig voneinander beabstandeten Paaren erster, einander gegenüberliegender Greifbacken (78) ausgerüstet ist, die die aufeinander folgenden Köpfe (B) am Beginn der Bahn erfassen und am Ende der Bahn freigeben,
- das Klebstoff-Abgabeorgan (20) so ausgebildet ist, daß es jeweils eine Klebstoffdosis (D) von oben auf den Boden jedes Sitzes (C) abgibt,
- der Zuführeinrichtung (24) für die Füße (A) ein zweiter Endlosförderer (28) zugeordnet ist, der mit dem ersten Endlosförderer (26) synchron kontinuierlich umläuft und mit gleichmäßig voneinander beabstandeten Paaren zweiter, einander gegenüberliegender Greifbacken (118) ausgerüstet ist, die so ausgebildet sind, daß sie die aufeinander folgenden Füße (A) seitlich erfassen, indem sie sie von der Zuführeinrichtung (24) an einer Stelle der Bahn abnehmen, die sich in Förderrichtung hinter dem Klebstoff-Abgabeorgan (20) befindet und jeden von diesen entlang eines folgenden Bahnabschnittes in eine Position bringen, die über dem für den entsprechen Kopf (B) vorgesehenen Sitz (C) zu diesem ausgerichtet ist,
- die Einführmittel eine Druckeinrichtung (30) aufweisen, die sich über dem genannten folgenden Bahnabschnitt erstreckt und einen ersten Abschnitt (32) aufweist, der so angeordnet und geneigt ist, daß er in Eingriff mit den Füßen (A) kommt und diese nacheinander in die Sitze (C) der Köpfe (B) einführt, sowie einen zweiten Abschnitt (34), der so angeordnet ist, daß er die Füße (A) unter Druck in den Sitzen (C) hält, bis die Klebstoffdosis (D) abgebunden hat.

2. Montagemaschine nach Anspruch 1, **dadurch gekennzeichnet, daß** die Paare der ersten Greifbacken (78) voneinander weg und aufeinander zu nachgiebig beweglich sind, um sich an Köpfe (B) verschiedener Durchmesser anzupassen.

3. Montagemaschine nach Anspruch 1 oder 2, **dadurch gekennzeichnet, daß** der erste Endlosförderer (26) eine Folge von Gleitträgern (76) aufweist, von denen jeder ein Paar der ersten Greifbacken (78) trägt, daß die ersten Greifbacken (78) jedes Paares als Schlitten ausgebildet sind, die auf dem jeweiligen Träger (76) zueinander und in entgegengesetzter Richtung quer verschiebbar sind und durch Federn (78) im Sinne eines gegenseitigen Spreizens beaufschlagt werden, daß jede der ersten Greifbacken (78) auf der von der anderen Greifbacke des Paares abgewandten Seite einen Tastkörper (86) hat, und daß der erste Endlosförderer (26) von einem Paar einander gegenüberliegender Schienen (88) flankiert ist, die sich entlang der Bahn erstrecken und als Linearnocken wirken, mit denen die Tastkörper (86) in Eingriff kommen und die konvergierende Eingangsabschnitte (90) haben, um die beiden ersten Greifbacken (78) jedes Paares gegeneinander zu verschieben, wodurch jeweils ein Kopf (B) erfasst und bis zum Bahnende eingespannt gehalten wird.

4. Montagemaschine nach Anspruch 3, **dadurch gekennzeichnet, daß** jede Schiene (88) von einem Schwingkörper (92) getragen wird, wodurch sie sich in Richtung auf den ersten Förderer (26) und von diesem weg bewegen kann, und daß die beiden Schwingkörper (92) über wenigstens eine Koppelstange (96) miteinander verbunden sind, die an den Schwingkörpern so angelenkt ist, daß sich die Schienen (88) symmetrisch zu der Bahn einander annähern und voneinander entfernen, um ein zentriertes Einklemmen der Köpfe (B) zu gewährleisten, die von den ersten Greifbacken (78) erfaßt werden.

5. Montagemaschine nach Anspruch 4, **dadurch gekennzeichnet, daß** die Koppelstange oder jede Koppelstange (96) eine einstellbare Länge hat, um den Abstand der Schienen (88) von der Bahn symmetrisch einstellen zu können.

6. Montagemaschine nach einem der Ansprüche 3 bis 5, **dadurch gekennzeichnet, daß** der erste Förderer ein Paar endloser Ketten (36) hat, die einander gegenüberliegend angeordnet sind und Antriebsräder (38) sowie angetriebene Räder (40) haben, welche auf entsprechende, gemeinsame und in Querrichtung verlaufende Wellen (42, 44) aufgezogen sind, und daß die Gleitträger für die Greifbackenpaare aus Traversen (76) bestehen, die die beiden Ketten (36) in der Art von Stegen miteinander verbinden.

7. Montagemaschine nach einem der Ansprüche 3 bis 6, **dadurch gekennzeichnet, daß** die Zuführeinrichtung (18) für die Köpfe eine Eingangsrutsche (102) hat, auf der die Köpfe (B) zueinander ausgerichtet gleiten und die seitlich in die Bahn der ersten Greifbacken (78) in einer Position mündet, die über den Greifbacken liegt, sowie eine Startrutsche (104), die sich in einer in Förderrichtung abfallenden Richtung über dem Eingangsabschnitt der Bahn erstreckt und einen mittleren Längsschlitz (106) aufweist, und daß jeder Gleitträger (76) für die ersten Greifbacken (78) einen Mitnehmerzahn (108) hat, der durch den Längsschlitz (106) nach oben vorsteht, um eine von der Eingangsrutsche (102) kommenden Kopf (B) vorzuschieben und ihn zwischen die ersten Greifbacken (78) am Ende der Startrutsche (104) abzulegen.

8. Montagemaschine nach Anspruch 7, **dadurch gekennzeichnet, daß** das Klebstoff-Abgabeorgan (20) eine Düse (22) hat, die sich über dem Verbindungsbereich (110) zwischen der Eingangsrutsche (102) und der Startrutsche (104) befindet und so angeordnet ist, daß sie jedesmal einen Tropfen Klebstoff (D) in den Sitz (C) eines Kopfes (B) abgibt, der sich in Haltestellung in dem Verbindungsbereich (110) unmittelbar vor Beginn der Mitnahme des Kopfes (B) durch den Mitnehmerzahn (108) befindet.

9. Montagemaschine nach einem der vorhergehenden Ansprüche, **dadurch gekennzeichnet, daß** der zweite Endlosförderer (28) ein Paar endloser Ketten (46) hat, die synchron zueinander umlaufen und über entsprechende Antriebsräder (48) und angetriebene Räder (50) mit vertikalen Achsen umgelenkt werden, wobei die Räder der einen Kette in entgegengesetzter Richtung zu denen der anderen Kette rotieren und jede Kette die zweiten, untereinander gleich ausgebildeten Greifbacken (118) der Paare trägt, daß die Ketten (46) im wesentlichen parallel gegenüberliegende Arbeitstrume haben, entlang denen die zweiten Greifbacken (118) die Füße (A) der Stopfen ergreifen und dabei einzeln nacheinander von der Zuführeinrichtung (24) abnehmen und sie entlang der Bahn in eine zu den Sitzen (C) der von den ersten Greifbacken (78) transportierten Köpfen (B) ausgerichtete Position bringen, wobei die zweiten Greifbacken (118) auf die Füße (A) eine so schwache Klemmkraft ausüben, daß die Füße unter Einwirkung der Druckeinrichtung (30) nach unten verschoben werden können.

10. Montagemaschine nach Anspruch 9, **dadurch gekennzeichnet, daß** die Zuführeinrichtung (24) für die Füße einen vertikalen, rohrförmigen Eingangskanal (132) hat, in dem die übereinander gestapelten Füße (A) nach unten gelangen und an dessen Ende sich eine in Längsrichtung erstreckende Stützleiste (134) für den jeweils untersten Fuß (A) des Stapels befindet, daß die zweiten Greifbacken (118) so angeordnet sind, daß sie den jeweils untersten Fuß erfassen und ihn auf der Stützleiste (134) nach vorn schieben, und daß die Arbeitstrume der Ketten (46) des zweiten Förderers (28) konvergierende Eingangsabschnitte (136) haben, die sich im Bereich der Stützleiste (134) befinden, um jeden Fuß (A) mit progressiver Klemmung zu erfassen.

11. Montagemaschine nach Anspruch 9 oder 10, **dadurch gekennzeichnet, daß** die Arbeitstrume der Ketten (46) des zweiten Förderers (28) von einem Paar einander gegenüberliegender Schienen (120) flankiert sind, die als Linearnocken wirken und an denen die Ketten anliegen, wodurch die zweiten Greifbacken (118) in der die Füße (A) klemmenden Position gehalten werden, bis die Füße in die Sitze (C) der Köpfe (B) eingesetzt sind.

12. Montagemaschine nach Anspruch 10, **dadurch gekennzeichnet, daß** die Ketten (46) des zweiten Förderers (28) an Tragarmen (112) gehalten sind, die fliegend gelagert sind und von denen jeder nach Art einer Fahne schwenkbar um die Vertikalachse des zugehörigen Antriebsrades (48) gelagert ist, und daß die Tragarme (112) durch elastische Mittel aufeinander zu beaufschlagt sind, um auf die Füße (A) die erwähnte Klemmkraft auszuüben.

13. Montagemaschine nach Anspruch 12, **dadurch gekennzeichnet, daß** die beiden schwenkbaren Tragarme (112) über zwei Hebel (122) miteinander verbunden sind, die ineinander eingreifende Zahnsektoren (128) haben und so ausgebildet sind, daß die Symmetrielage der zweiten Greifbacken (118) relativ zu einer mittleren Translationslinie der Füße (A) gewährleistet wird, und daß die elastischen Mittel aus einer Feder (130) bestehen, die zwischen die beiden Hebel (122) eingesetzt ist.

14. Montagemaschine nach einem der vorhergehenden Ansprüche, **dadurch gekennzeichnet, daß** die Druckeinrichtung einen dritten Endlosförderer (30) aufweist, der synchron mit dem ersten und dem zweiten Förderer (26, 28) kontinuierlich umläuft und ein Paar nebeneinander angeordneter Ketten (56) hat, die synchron miteinander um Antriebsräder (58) und angetriebene Räder (60) mit horizontalen, in Querrichtung verlaufenden Achsen umlaufen und die eine Reihe von gleichmäßig voneinander beabstandeten, frei drehbaren Rädern oder Rollen (144) mit horizontalen Querachsen tragen, von denen jede einen von den zweiten Greifbacken (118) transportierten Fuß (A) begleitet und diesen dabei nach unten drückt, und daß die Umlaufbahn der beiden Ketten (56) ein unteres Arbeitstrum mit einem ersten Abschnitt (32) hat, der in Arbeitsrichtung abfällt und so angeordnet und geneigt ist, daß die Räder oder Rollen (144) in Eingriff mit den Füßen (A) kommen und diese unter Druck allmählich in die Sitze (C) der Köpfe (B) einfügen, sowie mit einem nachfolgenden, im wesentlichen horizontalen Abschnitt (34), der so angeordnet ist, daß er die Füße (A) unter Druck in den Sitzen (C) hält, bis der Klebstoff (D) abgebunden hat.

15. Montagemaschine nach Anspruch 14, **dadurch gekennzeichnet, daß** der dritte Förderer (30) von einem im wesentlichen vertikal beweglichen Organ (138) getragen wird, das durch elastische Mittel (142) nach unten gedrückt wird.

16. Montagemaschine nach Anspruch 15, **dadurch gekennzeichnet, daß** das bewegliche Organ (138) an einem Pantografengestänge (140) aufgehängt ist, das für eine parallele Lageverschiebung des Organs nach oben und nach unten sorgt.

17. Montagemaschine nach einem der vorhergehenden Ansprüche, **dadurch gekennzeichnet, daß** der erste Förderer (26) wenigstens eine endlos umlaufende Kette (36) hat, die über ein Antriebsrad (38) und ein angetriebenes Rad (40) umgelenkt wird, daß der zweite Förderer (28) wenigstens eine endlos umlaufende Kette (46) hat, die über ein Antriebsrad (48) und ein angetriebenes Rad (50) umgelenkt wird, daß die Druckeinrichtung einen dritten Endlosförderer (30) mit wenigstens einer endlos umlaufenden Kette (56) hat, die über ein Antriebsrad (58) und ein angetriebenes Rad (60) umgelenkt wird und eine Reihe von Rädern oder Rollen (144) für die Druckausübung auf die Füße (A) trägt, und daß die Antriebsräder (38, 48, 58) der drei Förderer (26, 28, 30) am Ende der Bahn angeordnet und mit einem gemeinsamen Motor (64) über ein Zahnradgetriebe (68, 72, 74) verbunden sind, so daß die drei Förderer synchron miteinander umlaufen.

## Revendications

1. Machine d'assemblage pour des bouchons en forme de champignon destinés à des bouteilles, lesquels bouchons comprennent un fût (A) de liège et une tête (B) de plastique, de bois ou de matériau équivalent, dans lequel la tête comporte un siège central (C) dans lequel une partie d'extrémité du fût est insérée en interposant de la colle (D), et dans laquelle la machine comprend :
- un pourvoyeur de têtes (18),
- un moyen de transport (26) qui définit un cheminement et qui, au début du cheminement, reçoit les têtes (B) une à une à partir de leur pourvoyeur (18), et, à la fin du cheminement, libère les bouchons assemblés,
- un pourvoyeur de fûts (24) capable de présenter un fût (A) dans une position alignée avec le siège (C) de chaque tête (B) successivement transportée,
- un distributeur de colle (20) agencé le long du cheminement et capable d'interposer une mesure (D) de fluide adhésif entre chaque tête (B) transportée successive et le fût (A) associé, et
- un moyen d'insertion (30) capable d'insérer sous pression chaque fût (A) dans le siège (C) de la tête (B) associée avec l'interposition de la colle (D),
**caractérisée en ce que**
- le pourvoyeur de têtes (18) est capable de pourvoir les fûts (B) avec leurs sièges (C) ouverts vers le haut,
- le moyen de transport comprend un premier convoyeur sans fin (26) continuellement mobile, muni de paires équidistantes de premières mâchoires opposées (78) capables de saisir latéralement les têtes (B) successives au début du cheminement, et de les libérer à la fin du cheminement,
- le distributeur de colle (20) est agencé de telle manière à déposer, à partir du dessus, une mesure de colle (D) sur le fond de chaque siège (C),
- associé avec le pourvoyeur de fûts (24), on trouve un deuxième convoyeur sans fin (28), qui est continuellement mobile en synchronisme avec le premier convoyeur sans fin (26), et qui est muni de paires équidistantes de secondes mâchoires opposées (118) capables de saisir latéralement les fûts (A) successifs, les prenant à partir du pourvoyeur (24), en un point sur le cheminement situé en aval du distributeur de colle (20), et de transporter chacun d'eux sur une partie successive du cheminement, dans une position alignée au-dessus du siège (C) de la tête (B) correspondante, et
- le moyen d'insertion comprend un dispositif de pression (30) qui s'étend au-dessus de la partie successive du cheminement ci-dessus mentionnée, et qui comporte une première partie (32) qui est agencée et inclinée de telle manière à engager les fûts (A) et les insérer progressivement dans les sièges (C) des têtes (B), et une seconde partie (34) qui est agencée de telle manière à maintenir les fûts (A) dans un état dans lequel ils sont pressés dans les sièges (C) jusqu'à ce que, dans le cheminement, la mesure de colle (D) ait pris.

2. Machine d'assemblage selon la revendication 1, **caractérisée en ce que** les paires de premières mâchoires (78) peuvent être écartées et rapprochées l'une vers l'autre d'une manière accommodante afin de s'adapter aux têtes (B) présentant différents diamètres.

3. Machine d'assemblage selon la revendication 1 ou 2, **caractérisée en ce que** le premier convoyeur (26) comprend une succession de supports à coulisse (76), dont chacun emporte une paire de premières mâchoires (78), **en ce que** les premières mâchoires (78) de chaque paire sont sous la forme de coulisses pouvant coulisser transversalement sur le support respectif (76), l'une vers l'autre et dans la direction opposée, et sont poussées par des ressorts (84) dans la direction où elles s'écartent l'une de l'autre, **en ce que** chaque mâchoire (78) est munie, sur un côté éloigné de l'autre mâchoire de la paire, d'un élément suiveur (86), et **en ce que** le premier convoyeur (26) est flanqué d'une paire de rails opposés (88) s'étendant le long du cheminement, agissant en tant que cames linéaires qui peuvent être engagées par les éléments suiveurs (86) et comportant des parties initiales convergentes (90) destinées à déplacer les deux premières mâchoires (78) de la paire l'une vers l'autre, de telle manière à saisir une tête (B) et à la garder saisie jusqu'à la fin du cheminement.

4. Machine d'assemblage selon la revendication 3, **caractérisée en ce que** chaque rail (88) est supporté par un élément oscillant (92), de telle manière à pouvoir déplacer le premier convoyeur (26) vers l'avant et dans la direction opposée, et **en ce que** les deux éléments oscillants (92) sont reliés l'un avec l'autre à l'aide d'au moins une tige de connexion (96) qui est articulée sur les éléments oscillants, de telle manière que les rails (88) se déplacent en se rapprochant et en s'écartant l'un de l'autre symétriquement par rapport au cheminement, afin d'assurer que les têtes (B) saisies par les premières mâchoires (78) soient serrées de manière centrée.

5. Machine d'assemblage selon la revendication 4, **caractérisée en ce que** la tige de connexion ou chaque tige de connexion (96) a une longueur ajustable de façon à ce que la distance entre les rails (88) et le cheminement puisse être ajustée symétriquement.

6. Machine d'assemblage selon l'une quelconque des revendications 3 à 5, **caractérisée en ce que** le premier convoyeur comprend une paire de chaînes sans fin (36) qui sont agencées côte à côte et qui ont des pignons d'entraînement (38) et des pignons entraînés (40) clavetés sur des arbres transverses communs respectifs (42, 44), et **en ce que** les supports à coulisse des paires de mâchoires sont constitués de traverses (76) qui relient les deux chaînes (36) l'une avec l'autre à la manière de ponts.

7. Machine d'assemblage selon l'une quelconque des revendications 3 à 6, **caractérisée en ce que** le pourvoyeur de têtes (18) comprend une glissière d'arrivée (102) le long de laquelle les têtes (B) glissent de manière alignée et qui s'ouvre latéralement dans le cheminement des premières mâchoires (78) dans une position qui est surélevée par rapport à ces mâchoires, et une glissière de sortie (104) qui s'étend avec une pente descendante en direction de l'aval le long d'une partie initiale du cheminement et qui comporte une fente longitudinale médiane (106), et **en ce que** chaque support à coulisse (76) des premières mâchoires (78) comporte une dent d'entraînement (108) qui est capable de saillir vers l'avant à travers la fente (106) afin de pousser une tête (B) venant de la glissière d'arrivée (102) et de la déposer entre les premières mâchoires (78) à l'extrémité de la glissière de sortie (104).

8. Machine d'assemblage selon la revendication 7, **caractérisée en ce que** le distributeur de colle (20) comprend une buse (22) placée au-dessus d'une zone de connexion (110) entre la glissière d'arrivée (102) et la glissière de sortie (104) et est agencée de telle manière à déposer, à chaque fois, une goutte de colle (D) dans le siège (C) de la tête (B) qui s'est arrêtée dans la zone de connexion (110), immédiatement avant que la dent d'entraînement (108) ne commence à entraîner cette tête (B).

9. Machine d'assemblage selon l'une quelconque des revendications précédentes, **caractérisée en ce que** le deuxième convoyeur (28) comprend une paire de chaînes sans fin (46) qui circulent à l'unisson et qui sont guidées par des pignons d'entraînement (48) et des pignons entraînés (50) respectifs dotés d'axes verticaux, les pignons d'une chaîne tournant dans la direction opposée à ceux de l'autre chaîne, et dont chaque chaîne emporte les secondes mâchoires (118) homologues des paires, **en ce que** les chaînes (46) ont des cheminements actifs sensiblement parallèles qui sont agencés côte à côte et le long desquels les secondes mâchoires (118) saisissent les fûts (A) des bouchons, les prenant un par un à partir de leur pourvoyeur (24), et les transportent le long du cheminement vers des positions respectives alignées avec les sièges (C) des têtes (B) transportées par les premières mâchoires (78), les secondes mâchoires (118) exerçant sur les fûts (A) une force de serrage qui est suffisamment faible pour permettre la descente des fûts dans les sièges (C) au moyen du dispositif de pression (30).

10. Machine d'assemblage selon la revendication 9, **caractérisée en ce que** le pourvoyeur de fûts (24) comprend un conduit d'arrivée tubulaire vertical (132) dans lequel les fûts (A) descendent en empilage et à l'extrémité duquel se trouve un rebord de palier longitudinal (134) destiné à chaque fût (A) le plus bas successivement de l'empilage, **en ce que** les secondes mâchoires (118) sont agencées de telle manière à saisir la tête la plus basse, l'obligeant à glisser vers l'avant sur le rebord (134), et **en ce que** les cheminements actifs des chaînes (46) du deuxième convoyeur (28) comprennent des parties initiales convergentes (136), agencées à l'emplacement du rebord (134), destinées à saisir chaque fût (A) avec un serrage progressif.

11. Machine d'assemblage selon la revendication 9 ou 10, **caractérisée en ce que** les cheminements actifs des chaînes (46) du deuxième convoyeur (28) sont flanqués d'une paire de rails opposés (120) agissant en tant que des cames linéaires engagées par les chaînes afin de garder les secondes mâchoires (118) dans une position serrée autour des fûts (A) jusqu'à ce que les fûts aient été engagés dans les sièges (C) des têtes (B).

12. Machine d'assemblage selon la revendication 10, **caractérisée en ce que** les chaînes (46) du deuxième convoyeur (28) sont emportées par des bras de support en porte-à-faux (112), dont chacun peut tourner à la manière d'un drapeau autour de l'axe vertical des pignons d'entraînement (48) respectifs, et **en ce que** ces supports (112) sont poussés l'un vers l'autre par un moyen élastique (130) afin d'exercer la force de serrage précédemment mentionnée sur les tiges (A).

13. Machine d'assemblage selon la revendication 12, **caractérisée en ce que** les deux bras (112) du deuxième convoyeur (28), qui peuvent tourner à la manière d'un drapeau, sont reliés l'un à l'autre à l'aide d'une paire de leviers (122) qui comportent des secteurs dentés (128) en prise l'un avec l'autre et qui sont agencés de telle manière à assurer que les secondes mâchoires (118) sont symétriques par rapport à une ligne médiane de translation des fûts (A), et **en ce que** le moyen élastique mentionné ci-dessus comprend un ressort (130) interposé entre les leviers (122).

14. Machine d'assemblage selon l'une quelconque des revendications précédentes, **caractérisée en ce que** le dispositif de pression comprend un troisième convoyeur sans fin (30) qui est continuellement mobile en synchronisme avec le premier et le deuxième convoyeur (26, 28), comportant une paire de chaînes (56) qui sont agencées côte à côte et qui circulent en synchronisme autour de pignons d'entraînement (58) et de pignons entraînés (60) dotés d'axes transverses horizontaux, et qui emportent une série de roues ou de rouleaux libres équidistants (144) dotés d'axes transverses horizontaux, capables chacun d'accompagner un fût (A) transporté par les secondes mâchoires (118) et de l'engager, en le pressant vers le bas, et **en ce que** le cheminement des deux chaînes (56) comprend un cheminement inférieur actif présentant une première partie (32) qui descend en direction de l'aval et qui est agencée et inclinée de telle manière que les roues ou rouleaux (144) engagent les fûts (A) et pressent dessus, les insérant graduellement dans les sièges (C) des têtes (B), et une partie successive, sensiblement horizontale, (34) qui est agencée de telle manière à garder les fûts (A) dans un état pressé dans les sièges (C) jusqu'à ce que la colle (D) ait prise.

15. Machine d'assemblage selon la revendication 14, **caractérisée en ce que** le troisième convoyeur (30) est emporté par un élément mobile sensiblement verticalement (138) qui est poussé vers le bas à l'aide du moyen élastique (142).

16. Machine d'assemblage selon la revendication 15, **caractérisée en ce que** l'élément mobile (138) est suspendu à une tringlerie de pantographe (140) qui assure qu'il est soulevé et abaissé, en le gardant parallèle à lui-même.

17. Machine d'assemblage selon la revendication 1, **caractérisée en ce que** le premier convoyeur (26) comprend au moins une chaîne sans fin (36) guidée par un pignon d'entraînement (38) et un pignon entraîné (40) et le deuxième convoyeur (28) comprend au moins une chaîne sans fin (46) guidée par un pignon d'entraînement (48) et un pignon entraîné (50), **en ce que** le dispositif de pression comprend un troisième convoyeur sans fin (30) comportant au moins une paire de chaînes sans fin (56) qui sont guidées par un pignon d'entraînement (58) et par un pignon entraîné (60) et qui emportent une série de roues ou de rouleaux (144) destinés à presser sur les fûts, et **en ce que** les pignons d'entraînement (38, 48, 58) des trois convoyeurs (26, 28, 30) sont agencés en aval du cheminement et sont reliés à un moteur commun (64) au moyen d'un train d'engrenages (68, 72, 74) de telle manière que les trois convoyeurs circulent en synchronisme.
